# EUROPEAN PATENT APPLICATION

(11) **EP 4 336 216 A1**
(43) Date of publication of application: **13.03.2024**
(21) Application number: 22194139.6
(22) Date of filing: 06.09.2022
(51) Int. Cl.: G01S 13/86, G01S 13/04, G07C 9/00, B60R 25/24, E05B 81/76, G01S 13/02, G01S 13/74, G01S 11/06, H04W 4/40, G01S 13/931

(54) **METHODS FOR IMPROVING AN ULTRA-WIDE BAND RANGING SESSION, APPARATUS, VEHICLE AND COMPUTER PROGRAM**

(71) Applicant: Bayerische Motoren Werke Aktiengesellschaft, 80809 München (DE)
(72) Inventor: Mourad, Alaa, 80995 München (DE); Kuelzer, Daniel, 80799 München (DE)

(57) **Abstract**

Embodiments relate to a method (100) for improving an ultra-wide band ranging session of a vehicle. The method comprises obtaining (110) sensor data indicative of an approach of a person to the vehicle. Further, the method (100) comprises determining (120) an approach of the person to the vehicle based on the sensor data and initiating (130) the ultra-wide band ranging session based on the determined approach.

## Description

The present disclosure relates to the field of ultra-wide band ranging. Embodiments relate to methods for improving an ultra-wide band ranging session, an apparatus, a vehicle and a computer program.

To permit a person an access to a vehicle a position of user equipment (UE) carried by the user can be used. To determine the position of the UE an ultra-wide band (UWB) a ranging intent transmitted from the UE can be utilized. The ranging intent may define a trigger for the digital key framework to start UWB ranging. The ranging intent is triggered by the UE (see Car Connectivity Consortium's (CCC) standard release 3, CCC-TS-101). Without a localization via UWB ranging, no change in the central locking system of a vehicle may be possible in advance to a user action. If the UE (e.g., a smartphone) does not send a ranging intent no UWB ranging may be performed. Thus, only a user action, e.g., pulling of the door handle, would cause an active vehicle-triggered UWB ranging start as fallback. This may negatively affect a user's experience. Thus, there may be a demand to improve an UWB ranging.

It is therefore a finding that an UWB ranging (session) can be improved by determining an approach of a person to the vehicle and initiating the UWB ranging (session) based on the determined approach. Thus, the UWB ranging (session) can be initiated when needed leading to a decreased energy consumption of the vehicle.

Examples provide a method for improving an ultra-wide band ranging session of a vehicle, comprising obtaining sensor data indicative of an approach of a person to the vehicle. Further, the method comprises determining an approach of the person to the vehicle based on the sensor data and initiating the ultra-wide band ranging session based on the determined approach. This way, a UWB ranging session of the vehicle can be started triggered by the sensor data. For example, a passive vehicle triggered UWB ranging session can be initiated by the vehicle. This way, a ranging intent received from a UE is not needed. Thus, a person's experience can be increased and/or an energy consumption of the vehicle can be decreased.

In an example, the approach may be determined based on sensor data of a sensor of at least one of a microphone, an ultrasonic sensor, a radar sensor, a Bluetooth low energy sensor or a camera. This way, a determination of the approach can be improved, since sensor data can be chosen with respect to an actual situation, e.g., an environment.

In an example, the method may further comprise determining a position of the person relative to the vehicle based on the sensor data. Further, initiating the ultra-wide band ranging session may be based on the position of the person. This way, the initiating of the UWB ranging session can be improved based on the position of the person relative to the vehicle, e.g., the UWB ranging session may be initiated if the person is besides a door of the vehicle.

In an example, determining the approach may be based on sensor data of multiple sensors. This way, the determination of the approach can be improved by combining different sensor data.

In an example, the method may further comprise checking whether the person is authorized to use the vehicle. This way, a false initiation of the UWB ranging session can be avoided.

Examples provide a method for improving an ultra-wide band ranging session of a vehicle, comprising receiving data indicative of a ranging intent from user equipment and obtaining sensor data indicative of an approach of a person to the vehicle. Further, the method comprises determining an approach of the person to the vehicle based on the sensor data and validating the ranging intent based on the approach to improve the ultra-wide band ranging session. This way, the ranging intent can be either accepted or rejected (or ignored by the vehicle) based on the approach of the person. Thus, an unnecessary initiation of a UWB ranging session can be avoided.

In an example, the method may further comprise initiating the ultra-wide band ranging session based on the determined approach. This way, the UWB ranging session can be only initiated when needed.

Examples relate to an apparatus, comprising interface circuitry configured to communicate with a sensor and processing circuitry configured to perform a method as described above.

Examples relate to a vehicle, comprising an apparatus as described above and a sensor for measuring sensor data.

Examples further relate to a computer program having a program code for performing the method described above, when the computer program is executed on a computer, a processor, or a programmable hardware component.

Some examples of apparatuses, methods and/or computer programs will be described in the following by way of example only, and with reference to the accompanying figures, in which
Fig. 1 shows an example of a method;
Fig. 2 shows another example of a method; and
Fig. 3 show a block diagram of an example of an apparatus.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed, or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

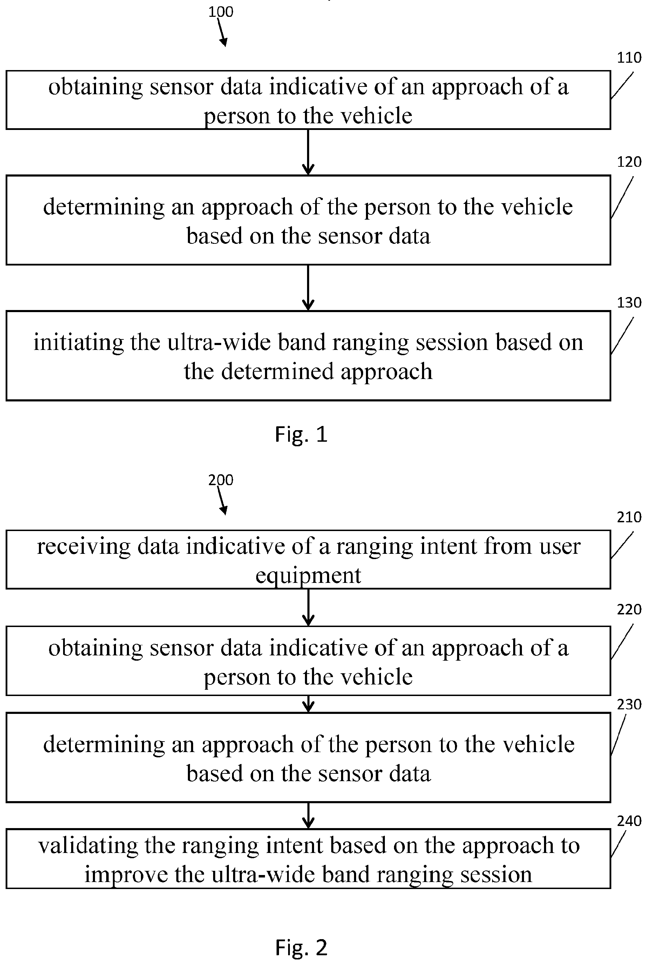

Fig. 1 shows an example of a method 100. The method 100 for improving an ultra-wide band ranging session of a vehicle comprises obtaining 110 sensor data indicative of an approach of a person to the vehicle. Further, the method 100 comprises determining 120 an approach of the person to the vehicle based on the sensor data and initiating 130 the ultra-wide band ranging session based on the determined approach. This way, an UWB ranging session can be initiated independently of a received ranging intent. Therefore, an energy consumption of the vehicle can be reduced by initiating an UWB ranging session if needed and/or even without a ranging intent. Further, a ranging intent without a corresponding determined approach can be ignored by the vehicle. Thus, an unnecessary initiation of an UWB ranging session can be omitted. Further, the energy consumption of the vehicle can be increased without decreasing a person's experience by relying on fallback, such like pulling the door handle to initiate the UWB ranging session.

Obtaining 110 the sensor data may be performed by receiving the sensor data from a sensor, e.g., a sensor of an infrastructure and/or by measuring the sensor data using a sensor of the vehicle. The sensor data may comprise raw data of the sensor. The raw data may be evaluated by a processing circuitry comprised by the vehicle, e.g., by a control unit. Alternatively, the sensor data may comprise evaluated data, e.g., position data, distance data, which is indicative of the approach.

Determining 120 the approach may be performed by a processing circuitry of the vehicle, e.g., by a control unit. An approach may be when the person is within a predefined distance to the vehicle, at a predefined position relative to the vehicle, especially in a non-obstructed line-of-sight. For example, an approach may be restricted to a line-of-sight between the person and the vehicle. When an obstacle, e.g., a wall, separates the person from the vehicle no approach may be determined independently of the position or distance of the person relative to the vehicle. For example, the approach may indicate a likelihood that the person may want to use the vehicle. The likelihood may be determined based on the environment of the vehicle, e.g., an obstacle and/or the position or distance of the person relative to vehicle.

The UWB ranging session may be initiated 130 when an approach of the person was determined, e.g., by the processing circuitry. For example, the processing circuitry may generate an initiation signal comprising data indicative of an initiation of an UWB ranging session. This way, the UWB ranging session may be only initiated if the likelihood of a usage of the vehicle is increased. Thus, an energy consumption of the vehicle can be reduced. Further, the UWB ranging session can be initiated when needed increasing the person's experience.

In an example, the approach may be determined based on sensor data of a sensor of at least one of a microphone, an ultrasonic sensor, a radar sensor, a Bluetooth low energy sensor or a camera. This way, a suitable sensor can be used to obtain the sensor data, e.g., to adjust obtaining 110 the sensor data to a specific situation, e.g., take into account obstacle, a daytime.

For example, the sensor data may be indicative of Bluetooth low energy signal received strength signal indication (RSSI) values, Bluetooth low energy distance measurement using channel sounding, especially by use of the channel sounding standard for Bluetooth (e.g., by use of mode 2), ultrasonic measurement, radar measurement or voice detection. Based on this sensor data a distance or position between the person and the vehicle can be determined. For example, a detected louder voice of the person may indicate a smaller distance to the vehicle. For example, a higher RSSI value may indicate a smaller distance to the vehicle. For example, a position of the person can be determined based on the ultrasonic measurement or the radar measurement. Based on the distance and/or position the approach can be determined 120.

For example, an approach may be detected when the person is within a vicinity of the vehicle e.g., within a distance of at most 2 m, or at most 1 m to a door of the vehicle. In an example, the method may further comprise determining a position of the person relative to the vehicle based on the sensor data. Further, initiating 130 the ultra-wide band ranging session may be based on the position of the person. For example, an approach may be determined when the position of the person relative to the vehicle indicates an intended use of the vehicle, e.g., the person may be besides a door of the vehicle within a distance of at most 2 m may be determined as an approach, whereas a position of the person at the front of the vehicle within a distance of at most 2 m may not be determined as an approach.

In an example, determining the approach may be based on sensor data of multiple sensors. For example, a robust implementation could use an ensemble learner to combine different sources of information, e.g., sensor data of multiple sensors.

In an example, the method may further comprise checking whether the person is authorized to use the vehicle. For example, the sensor data may be received from a camera. Thus, the sensor data may be indicative of an image of the person. For example, a face detection of the person can be performed, e.g., by an artificial intelligence. This way, the person can be identified. Based on the identification a check whether the person is authorized to use the vehicle can be performed. Thus, the UWB ranging session may be only initiated when an approach of an authorized person is determined.

More details and aspects are mentioned in connection with the embodiments described below. The example shown in Fig. 1 may comprise one or more optional additional features corresponding to one or more aspects mentioned in connection with the proposed concept or one or more examples described below (e.g., Fig. 2 - 3).

Fig. 2 shows an example of a method 200. The method 200 for improving an ultra-wide band ranging session of a vehicle comprises receiving 210 data indicative of a ranging intent from user equipment and obtaining 220 sensor data indicative of an approach of a person to the vehicle. Further, the method 200 comprises determining 230 an approach of the person to the vehicle based on the sensor data and validating 240 the ranging intent based on the approach to improve the ultra-wide band ranging session. Thus, by validating 240 the ranging intent the vehicle can decide whether an UWB ranging session is initiated or not. For example, the vehicle can reject the ranging intent, e.g., because no approach of the person could be determined. Thus, the likelihood that the person may use the vehicle may be too low to initiate the UWB ranging session.

In an example, the method may further comprise initiating the ultra-wide band ranging session based on the determined approach. For example, UE may be carried by the person and may transmit a ranging intent to the vehicle event though the person may be separated by a wall from the vehicle. Thus, the vehicle may not initiate a UWB ranging session, since no approach can be determined because the person not in a line-of-sight to the vehicle.

For example, the UE may be a User Terminal (UT) or User Equipment (UE) within the meaning of the respective communication standards being used for mobile communication. For example, the UE may be a mobile phone, such as a smartphone, or another type of mobile communication device, such as a smartwatch, a laptop computer, a tablet computer, or autonomous augmented-reality glasses.

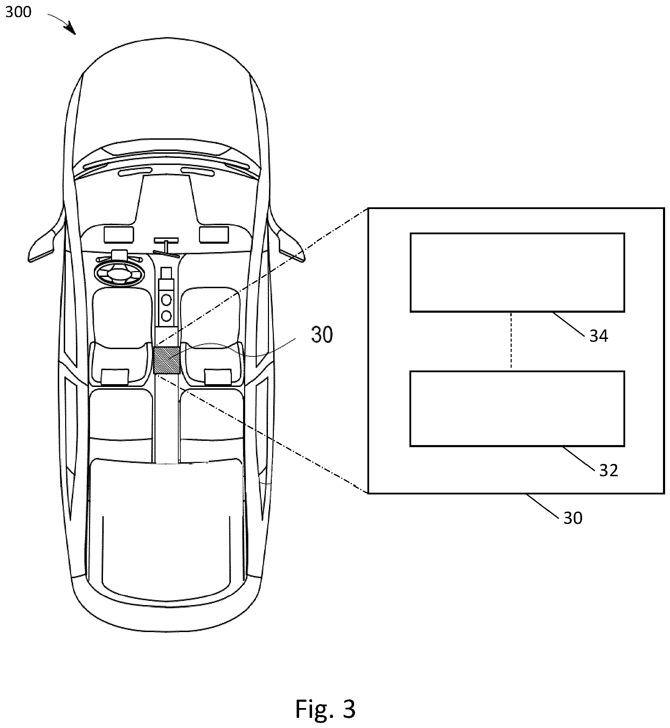

More details and aspects are mentioned in connection with the embodiments described above and/or below. The example shown in Fig. 2 may comprise one or more optional additional features corresponding to one or more aspects mentioned in connection with the proposed concept or one or more examples described above (e.g., Fig. 1) and/or below (e.g., Fig. 3).

Fig. 3 shows an example of a block diagram of an apparatus 30 for a vehicle 300. The apparatus comprises interface circuitry 32 configured to communicate with a senor and processing circuitry 34 configured to perform a method as described above, e.g., with reference to Fig. 1 and/or Fig. 2. For example the apparatus may be comprised the vehicle 300, e.g., by a control unit of the vehicle 300.

For example, the vehicle 300 may be a land vehicle, such a road vehicle, a car, an automobile, an off-road vehicle, a motor vehicle, a bus, a robo-taxi, a van, a truck or a lorry. Alternatively, the vehicle 300 may be any other type of vehicle, such as a train, a subway train, a boat or a ship. For example, the proposed concept may be applied to public transportation (trains, bus) and future means of mobility (e.g., robo-taxis).

As shown in Fig. 3 the respective interface circuitry 32 is coupled to the respective processing circuitry 34 at the apparatus 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface circuitry 32, so that any data transfer that occurs over the interface circuitry 32 and/or any interaction in which the interface circuitry 32 may be involved may be controlled by the processing circuitry 34.

In an embodiment the apparatus 30 may comprise a memory and at least one processing circuitry 34 operably coupled to the memory and configured to perform the method describe above.

In examples the interface circuitry 32 may correspond to any means for obtaining, receiving, transmitting or providing analog or digital signals or information, e.g. any connector, contact, pin, register, input port, output port, conductor, lane, etc. which allows providing or obtaining a signal or information. The interface circuitry 32 may be wireless or wireline and it may be configured to communicate, e.g., transmit or receive signals, information with further internal or external components.

The apparatus 30 may be a computer, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

More details and aspects are mentioned in connection with the embodiments described. The example shown in Fig. 3 may comprise one or more optional additional features corresponding to one or more aspects mentioned in connection with the proposed concept or one or more examples described above (e.g., Fig. 1 - 2).

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, - processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

### References

30 apparatus
32 processing circuitry
34 interface circuitry
100 method for improving an ultra-wide band ranging session
110 obtaining sensor data indicative of an approach of a person to the vehicle
120 determining an approach of the person to the vehicle based on the sensor data
130 initiating the ultra-wide band ranging session based on the determined approach
200 method for improving an ultra-wide band ranging session
210 receiving data indicative of a ranging intent from user equipment
220 obtaining sensor data indicative of an approach of a person to the vehicle
230 determining an approach of the person to the vehicle based on the sensor data
240 validating the ranging intent based on the approach to improve the ultra-wide band ranging session
300 vehicle

## Claims

1. A method (100) for improving an ultra-wide band ranging session of a vehicle, comprising
obtaining (110) sensor data indicative of an approach of a person to the vehicle;
determining (120) an approach of the person to the vehicle based on the sensor data; and
initiating (130) the ultra-wide band ranging session based on the determined approach.

2. The method (100) according to claim 1, wherein
the approach is determined based on sensor data of a sensor of at least one of microphone, ultrasonic sensor, radar sensor, Bluetooth low energy sensor or a camera.

3. The method (100) according to any of the preceding claims, further comprising
determining a position of the person relative to the vehicle based on the sensor data and wherein initiating the ultra-wide band ranging session is further based on the position of the person.

4. The method (100) according to any of the preceding claims, wherein
determining the approach is based on sensor data of multiple sensors.

5. The method (100) according to any of the preceding claims, further comprising
checking whether the person is authorized to use the vehicle.

6. A method (200) for improving an ultra-wide band ranging session of a vehicle, comprising:
receiving (210) data indicative of a ranging intent from user equipment;
obtaining (220) sensor data indicative of an approach of a person to the vehicle;
determining (230) an approach of the person to the vehicle based on the sensor data; and
validating (240) the ranging intent based on the approach to improve the ultra-wide band ranging session.

7. The method (200) according to claim 6, further comprising
initiating the ultra-wide band ranging session based on the determined approach.

8. An apparatus (30), comprising:
interface circuitry (32) configured to communicate with at least one of a communication device, user equipment or backend; and
processing circuitry (34) configured to perform a method (100; 200) according to any of the preceding claims.

9. A vehicle (50), comprising:
an apparatus according to claim 8; and
a sensor for measuring sensor data.

10. A computer program having a program code for performing the method (100; 200) according to claim 1 - 7, when the computer program is executed on a computer, a processor, or a programmable hardware component.
